# EUROPEAN PATENT APPLICATION

(11) **EP 1 143 757 A1**
(43) Date of publication of application: **10.10.2001**
(21) Application number: 00970032.9
(22) Date of filing: 24.10.2000
(51) Int. Cl.: H04Q 7/38

(54) **MOBILE COMMUNICATION TERMINAL AND HANDOVER CONTROL METHOD**

(30) Priority: 27.10.1999 JP 30539899
(71) Applicant: MATSUSHITA ELECTRIC INDUSTRIAL CO., LTD., Kadoma-shi, Osaka 571-8501 (JP)
(72) Inventor: KANEMOTO, Hideki, Yokosuka-shi, Kanagawa 239-0847 (JP); KATO, Osamu, Yokosuka-shi, Kanagawa 237-0066 (JP)
(74) Representative: Grünecker, Kinkeldey, Stockmair & Schwanhäusser Anwaltssozietät
(86) International application number: JP0007425
(87) International publication number: WO0131962

(57) **Abstract**

In the first place, a measurement section 105 measures a received SIR of a control channel signal assigned to a currently selected sector according to information denoting the selected sector stored in a selected sector storing section 106. Then, a comparison section 107 compares the received SIR and a predetermined threshold for received SIRS set in a storage section 108. Thereafter, the measurement section 105 measures received SIRs of a plurality of control channel signals, and a selection section 109 selects a control channel signal with the maximum received SIR among measured received SIRs in the measurement section 105, only when the received SIR is smaller than the predetermined threshold.

## Description

### Technical Field

The present invention relates to a mobile communication terminal apparatus and a hand-over control method.

### Background Art

In a conventional hand-over method, a mobile station performs hand-over so as to select a base station with better received quality after comparison of the received quality between control channel signals transmitted from a base station in a cell to which the above mobile station is belonging, and those transmitted from a base station in an adjacent cell. And, the mobile station performs, in a similar manner, the hand-over between sectors by comparison of the received quality among control channel signals assigned to each sector. Here, for example, a common control channel signal is used as a control channel signal.

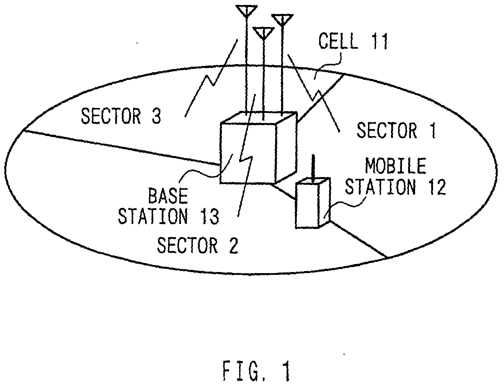

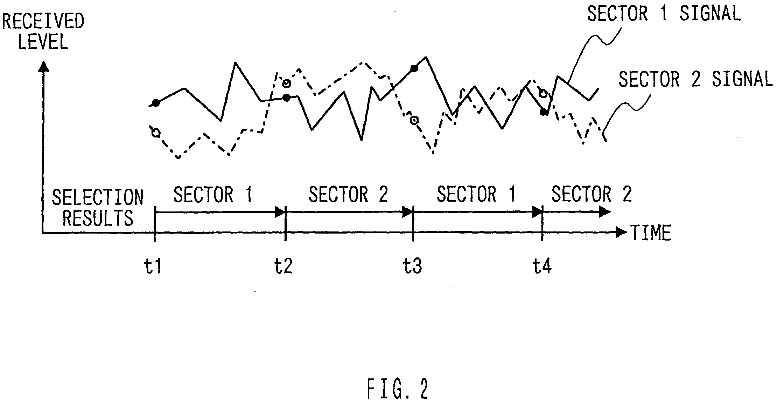

However, there have been the following problems in a conventional hand-over method. Hereinafter, the problems of the conventional hand-over method will be described, referring to FIG. 1 and FIG. 2. FIG. 1 is a conceptual diagram of a cell and sectors in a radio communication system, and FIG. 2 is a diagram showing relations between fluctuation states of the received levels of control channel signals and selection states of sectors in the conventional hand-over method.

In FIG. 1, there is a base station 13 in a cell 11. And, the cell 11 is divided into three sectors, that is, sectors 1 through 3. Moreover, the mobile station 12 is now located in the vicinity of the boundary between the sectors 1, 2 sufficiently close to the base station 13. In such a case, the mobile station 12 may receive at a sufficiently high level both of a control channel signal assigned to the sector 1 (hereinafter, called as "sector 1 signal") and that assigned to the sector 2 (hereinafter, called as "sector 2 signal").

Here, the received quality of the control channel signal assigned to the currently selected sector is occasionally deteriorated due to fluctuated propagation environment, by which a sector to be selected is changed every moment as shown in FIG. 2, though the mobile station 12 may receive the control channel signal assigned to the currently selected sector at a sufficiently high level.

Specifically, when the received level of the sector 1 signal is reduced and the received level of the sector 2 signal is higher than that of the sector 1 signal at time t2, and t4 due to the fluctuated propagation environment as shown in FIG. 2, there has occurred a problem that the mobile station 12 performs hand-over to the sector 2, though signals from sector 1 that is currently selected may be received in the mobile station 12 at a sufficiently high level to eliminate need for the above hand-over.

Moreover, there has been a problem that the mobile station 12 performs useless sector selection by comparison of both the received levels of the sector 1 signal and the sector 2 signal after receiving of the latter signal at every timing of t1 through t4, though signals from sector 1 that has been currently selected may be received at a sufficiently high level in the mobile station 12.

### Disclosure of Invention

The object of the present invention is to provide a mobile communication terminal apparatus and a hand-over control method by which battery saving may be achieved by reduction in unnecessary processing for hand-over control.

In order to achieve the above object, the present invention eliminates selection operation of a sector (hereinafter, called as "comparison selection operation") by comparison of the received quality among a plurality of control channel signals, while the received quality of the control channel signal currently received is kept enough.

### Brief Description of Drawings

FIG. 1 is a conceptual diagram of a cell and sectors of a radio communication system.
FIG. 2 is a diagram showing relations between fluctuation states of the received levels of control channel signals and selection states of sectors in a conventional hand-over method.
FIG. 3 is a principal block diagram showing a schematic configuration of a radio reception apparatus installed in a mobile communication terminal apparatus according to an embodiment 1 of the present invention.
FIG. 4 is a flowchart for description of operations of the mobile communication terminal apparatus according to the embodiment 1 of the present invention.
FIG. 5 is a diagram showing relations between fluctuation states of the received SIRs of control channel signals and selection states of sectors in a hand-over control method according to the embodiment 1 of the present invention.
FIG. 6 is a principal block diagram showing a schematic configuration of a radio reception apparatus installed in a mobile communication terminal apparatus according to an embodiment 2 of the present invention.
FIG. 7 is a flowchart for description of operations of the mobile communication terminal apparatus according to the embodiment 2 of the present invention.
FIG. 8 is a diagram showing relations between fluctuation states of the received SIRs of control channel signals and selection states of sectors in a hand-over control method according to the embodiment 2 of the present invention.

### Best Mode for Carrying Out the Invention

Hereinafter, embodiments according to the present invention will be described in detail, referring to drawings.

### (Embodiment 1)

In a mobile communication terminal apparatus and a hand-over control method according to the present embodiment, comparison selection operation is configured to be performed only when a value denoting the received quality of the control channel signal currently received does not meet a predetermined quality.

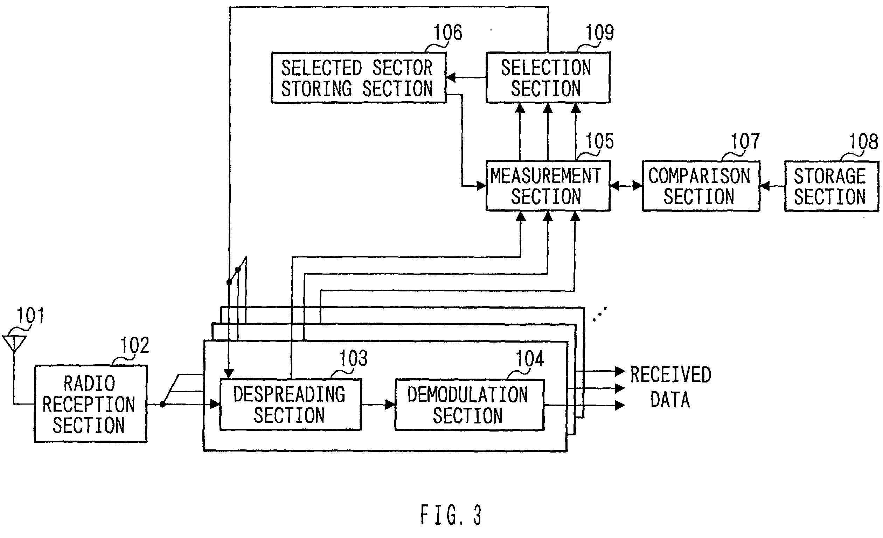

FIG. 3 is a principal block diagram showing a schematic configuration of a radio reception apparatus installed in a mobile communication terminal apparatus according to the embodiment 1 of the present invention. Hereinafter, there are described cases where a received SIR (Signal to Interference Ratio) is used as one example of a value denoting the received quality. However, any value such as a received level may be used as a value denoting the received quality if it may denote the received quality.

In FIG. 3, a radio reception section 102 performs predetermined radio processing (down conversion, A/D conversion and so on) of signals received through an antenna 101. A plurality of despreading sections 103 are provided corresponding to each sector for despreading of the received signals with spread codes assigned to each sector. A demodulation section 104 performs predetermined demodulation processing of signals in a user data part. Thereby, received data may be obtained.

Here, a plurality of despreading sections 103 and demodulation sections 104 are provided, corresponding to each sector.

On the other hand, a measurement section 105 measures, at a predetermined timing, received SIRS of control channel signals among despread received signals. And, the measurement section 105 measures received SIRS of a plurality of control channel signals only when the received SIR of the control channel signal assigned to a currently selected sector is smaller than the predetermined threshold. That is, the measurement section 105 measures received SIRS of a plurality of control channel signals only when the received quality of the control channel signal assigned to a currently selected sector does not meet the predetermined quality. Here, the control channel signal is a common control channel signal and so on, and spread with a unique spread code assigned to each sector.

A selected sector storing section 106 stores information denoting the currently selected sector. Information denoting a sector is, for example, a unique number assigned to each sector. A comparison section 107 compares the received SIR of the control channel signal assigned to the currently selected sector and the predetermined threshold of the received SIR set in a storage section 108. Here, the predetermined threshold may be properly set as a boundary value from which the received quality of the control channel signal does not meet a desired received quality.

A selection section 109 selects a control channel signal with the maximum received SIR among received SIRS measured in the measurement section 105, only when the received SIR of the control channel signal assigned to a currently selected sector is smaller than the predetermined threshold. That is, the selection section 109 selects a control channel signal with the best received quality, only when the received quality of the control channel signal assigned to a currently selected sector does not meet the predetermined quality. Then, the selection section 109 selects the despreading section 103 which has performed despreading of the selected control channel signal.

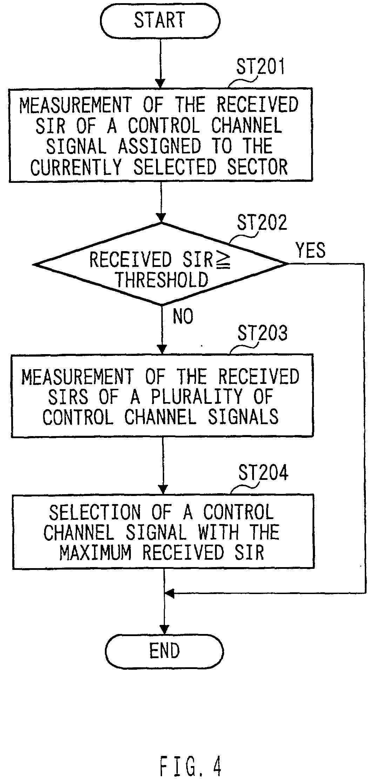

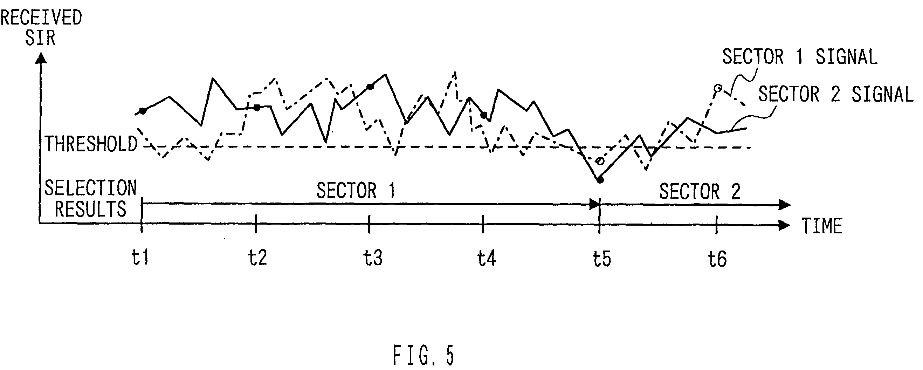

Now, operations of the mobile communication terminal apparatus with the above configuration will be described. FIG. 4 is a flowchart for description of operations of the mobile communication terminal apparatus according to the embodiment 1 of the present invention, and FIG. 5 is a diagram showing relations between fluctuation states of the received SIRs of control channel signals and selection states of sectors in a hand-over control method according to the embodiment 1 of the present invention.

A series of operations shown in the flow chart of FIG. 4 are performed respectively at predetermined timing of t1 through t6 as shown in FIG. 5. And, the control channel signal currently assigned to the sector 1 is assumed to be selected in the mobile communication terminal apparatus. Hereinafter, the control channel signal assigned to the sector 1 is called as "sector 1 signal", and the assigned one to the sector 2 as "sector 2 signal".

In the first place, the measurement section 105 refers to the selected sector storing section 106 at a step (hereinafter, shortened as "ST") 201. And, the measurement section 105 measures the received SIR of the control channel signal (now, a sector 1 signal here) according to information denoting the currently selected sector (now, a sector 1 here) for feeding of the measurement result to the comparison section 107.

Then, the comparison section 107 compares the received SIR of the control channel signal assigned to the currently selected sector and the predetermined threshold of the received SIR set in the storage section 108 for feeding of the comparison result to the measurement section 105 at ST 202. When the received SIR of the control channel signal assigned to the currently selected sector is equal to or larger than the predetermined threshold as a result of the above comparison, the measurement section 105 stops the subsequent processing. That is, When the received SIR of the control channel signal assigned to the currently selected sector is equal to or larger than the predetermined threshold, the mobile communication terminal apparatus does not perform the comparison selection operation.

On the other hand, the measurement section 105 measures received SIRs of a plurality of control channel signals (now, a sector 1 signal and a sector 2 signal here) for feeding of the measurement results to the selection section 109 at ST 203, when the received SIR of the control channel signal assigned to the currently selected sector is smaller than the predetermined threshold at ST 202.

Then, the selection section 109 selects at ST 204 a control channel signal with the maximum received SIR based on the measurement results at ST 203. That is, the selection section 109 selects a control channel signal with the best received quality. And, the selection section 109 updates information stored in the selected sector storing section 106 according to the selection result, and at the same time selects the despreading section 103 which has performed despreading of the selected control channel signal for stopping of the processing. Accordingly, the comparison selection operation is performed only when the received SIR of the control channel signal assigned to the currently selected sector is smaller than the predetermined threshold. That is, the comparison selection operation is not performed when the received SIR of the control channel signal assigned to the currently selected sector meets the predetermined quality.

As a result of the above operations, the timing for the comparison selection operation and the selected sectors are shown in FIG. 5. Black spots show timing for measurement of the received SIR of the sector 1 signal, that is, the control channel signal currently received, and white spots show timing for measurement of the received SIR of the sector 2 signal in FIG. 5.

The mobile communication terminal apparatus does not perform the comparison selection operation when the received SIR of the sector 1 signal is equal to or larger than the predetermined threshold as shown in FIG. 5, that is, when the received quality of the control channel signal currently received is kept enough. Accordingly, hand-over between the sectors is not performed. Specifically, as the received SIR of the sector 1 signal is equal to or larger than the threshold at time t1 through t4, the comparison selection operation is not performed, and then the hand-over between the sectors is not performed at time t1 through t4. Accordingly, the sector 1 is kept till the time t5 as a sector which the mobile communication terminal apparatus is selecting.

Then, comparison of the received SIR between the sector 1 signal and the sector 2 signal is performed for the first time when the received SIR of the sector 1 signal becomes smaller than the predetermined threshold at time t5. And the sector 2 signal with the larger received SIR is selected for hand-over to the sector 2. The comparison selection operation is not performed after that time until the received SIR of the sector 2 signal becomes smaller than the predetermined threshold.

Thus, according to the mobile communication terminal apparatus and the hand-over control method of the present embodiment, the comparison selection operation is performed only when the value denoting the received quality of the control channel signal currently received becomes smaller than the predetermined threshold. Thereby, useless selection operation and unnecessary hand-over are not performed, as the comparison selection operation is not performed while the control channel signal currently received keeps enough received quality. Accordingly, reduction in processing for the hand-over control may be realized, and at the same time, the battery saving may be also achieved.

### (Embodiment 2)

A mobile communication terminal apparatus and a hand-over control method according to the present embodiment is different from those of the embodiment 1 in that the received quality of the control channel signal is not measured during a predetermined number of measurement times after the subsequent timing to the timing at which the received quality of the control channel signal currently received meets the predetermined quality.

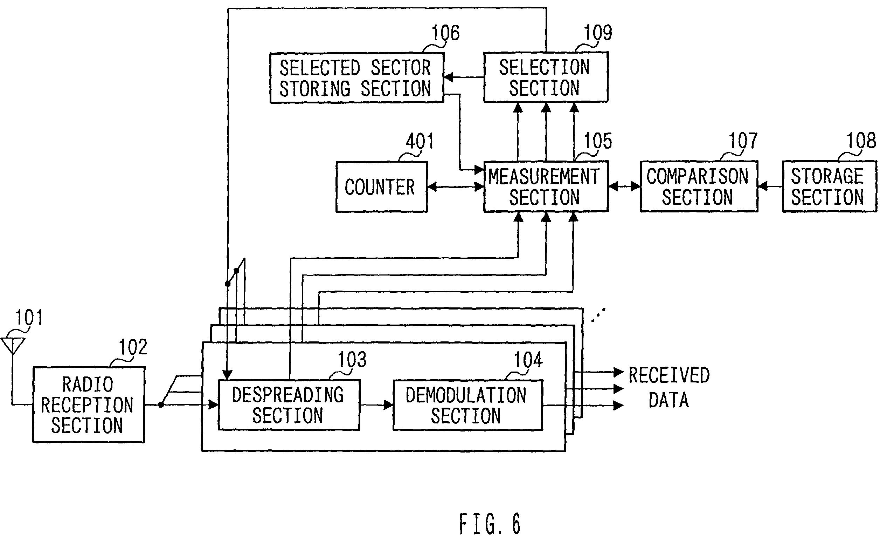

FIG. 6 is a principal block diagram showing a schematic configuration of a radio reception apparatus installed in a mobile communication terminal apparatus according to the embodiment 2 of the present invention. Here, parts similar to those previously described with reference to the embodiment 1 are denoted by the same reference numbers, and detailed description will be omitted.

A counter 401 is a counter for counting the number of the measurement timing during which the measurement is not performed, when the measurement section 105 does not measure the received SIR of the control channel signal for the measurement timing subsequent to the measurement timing at which the received SIR of the control channel signal becomes equal to or larger than the predetermined threshold.

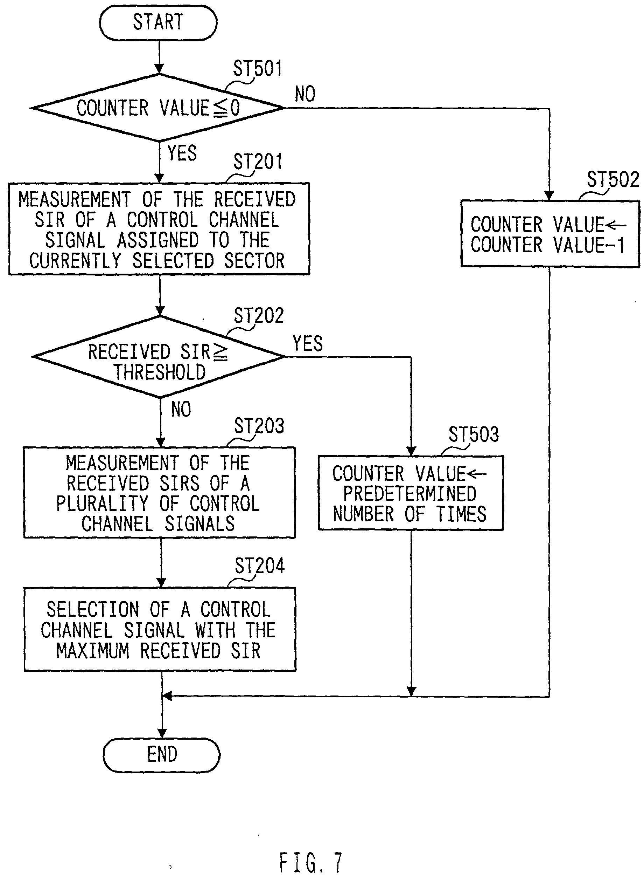

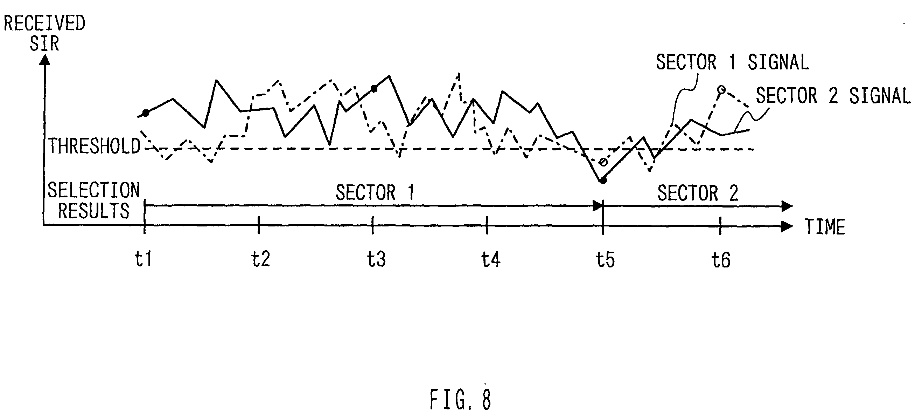

Now, operations of the mobile communication terminal apparatus with the above configuration will be described. FIG. 7 is a flowchart for description of operations of the mobile communication terminal apparatus according to the embodiment 2 of the present invention, and FIG. 8 is a diagram showing relations between fluctuation states of the received SIRS of control channel signals and selection states of sectors in a hand-over control method according to the embodiment 2 of the present invention. Here, operation steps similar to those previously described with reference to the embodiment 1 are denoted by the same reference numbers, and detailed description will be omitted in FIG. 7.

A series of operations shown in the flow chart of FIG. 7 are operations performed respectively at predetermined timing of t1 through t6 shown in FIG. 8.

In the first place, the measurement section 105 refers to a counter value of the counter 401 at ST 501. Then, in the case of "0" as the counter value at the counter 401, the measurement section 105 measures at ST 201 the received SIR of the control channel signal assigned to the currently selected sector. On the other hand, in the case of not "0" as the counter value at the counter 401, the measurement section 105 decreases the counter value of the counter 401 by one at ST 502 for stopping of the processing.

Subsequently, the comparison section 107 compares the received SIR of the control channel signal assigned to the currently selected sector and the predetermined threshold at ST 202. As a result, when the received SIR of the control channel signal assigned to the currently selected sector is equal to or larger than the predetermined threshold, the measurement section 105 sets the predetermined number of times into the counter 401 at ST 503 for stopping of the processing. Here, the predetermined number of times is a number of times of measurement timing during which the measurement section 105 does not measure the received SIR of the control channel signal, and the number of times of the measurement timing during which the measurement section 105 does not measure the received SIR of the control channel signal may be arbitrarily adjusted by properly changing of the above predetermined number of times. Specifically, when the predetermined number of times is set as "1", the measurement of the received SIR is performed at every other measurement timing while the received SIR of the control channel signal assigned to the currently selected sector is equal to or larger than the predetermined threshold. Therefore, the measurement frequencies of the received SIR may be reduced by approximately half, when the predetermined number of times is set as "1".

On the other hand, when the received SIR of the control channel signal assigned to the currently selected sector are smaller than the predetermined threshold at ST 202, the measurement section 105 measures received SIRs of a plurality of control channel signals at ST 203 for feeding of the measurement results to the selection section 109.

As a result to the above operations, the measurement timing of the received SIR of the control channel signal is shown in FIG. 8. Black spots show timing for measurement of the received SIR of the sector 1 signal, that is, the control channel signal currently received, and white spots show timing for measurement of the received SIR of the sector 2 signal in FIG. 8.

Now, the counter value of the counter 401 is assumed to be "0" as an initial state. The predetermined number of times is set (now, set as "1" here) in the counter 401 as the received SIR of the sector 1 signal is equal to or larger than the predetermined threshold at t1. Accordingly, the measurement of the received SIR is performed at every other timing, until the received SIR of the sector 1 signal becomes smaller than the predetermined threshold, after t1 when the received SIR of the sector 1 signal becomes equal to or larger than the predetermined threshold. That is, the next measurement of the received SIR of the sector 1 signal is performed at timing of t3.

Then, comparison of the received SIR between the sector 1 signal and the sector 2 signal is performed when the received SIR of the sector 1 signal becomes smaller than the predetermined threshold at t5. Subsequently, the sector 2 signal with the larger received SIR is selected for hand-over to the sector 2. After that, the measurement of the received SIR of the sector 2 signal is performed at every other timing, until the received SIR of the sector 2 signal becomes smaller than the predetermined threshold.

Thus, according to the mobile communication terminal apparatus and the hand-over control method of the present embodiment, the received quality of the control channel signal is not measured during a predetermined number of measurement times after the subsequent timing to the timing at which a value denoting the received quality of the control channel signal currently received is equal to or larger than the predetermined threshold. Therefore, further reduction in processing for hand-over control may be realized in comparison with that of the embodiment 1 and, at the same time, battery saving may be also achieved.

Moreover, the mobile communication terminal apparatus and the hand-over control method according to the above embodiments 1, 2 may be also applied to idle hand-over. Here, in the idle hand-over, a mobile station observes control channel signals at waiting time for anytime selection of a cell or a sector to which the above station is belonging. When applied, reduction in processing for hand-over control may be realized at idle hand-over and, at the same time, battery saving may be also achieved.

And, a radio reception apparatus may be made inactive to a sleeping state during no measurement of a received SIR of a control channel signal in the mobile communication terminal apparatus according to the above embodiments 1, 2.

Moreover, a plurality of despreading sections and demodulation sections have been provided for reception of a plurality of control channel signals in the mobile communication terminal apparatus according to the above embodiments 1, 2. However, a plurality of control channel signals may be received by time sharing activation of one despreading section and one demodulation section.

As described above, battery saving may be achieved by reduction in unnecessary operations at hand-over control, according to the present invention.

This application is based on the Japanese Patent Application No. HEI 11-305398, filed on Oct. 27, 1999, the entire contents of which are expressly incorporated herein by reference.

### Industrial Applicability

The present invention may be applicable to a mobile communication terminal apparatus used in a mobile communication system.

## Claims

1. A mobile communication terminal apparatus comprising:
a measurer for measuring of received quality of a plurality of control channel signals; and
a comparison selector for performing a comparison selection operation by which a control channel signal with the best received quality is selected after comparison of the received quality which is measured by said measurer, wherein
said comparison selector does not perform the comparison selection operation when the received quality of a control channel signal currently received meets a predetermined quality.

2. The mobile communication terminal apparatus according to claim 1, wherein
said measurer reduces a measurement frequency when the received quality of the control channel signal currently received meets the predetermined quality.

3. The mobile communication terminal apparatus according to claim 1, wherein said mobile communication terminal apparatus is activated at waiting time.

4. The mobile communication terminal apparatus according to claim 1, wherein
said measurer measures the received quality of a control channel signal spread with a unique spread code assigned to each sector.

5. A hand-over control method, wherein
measurement of the received quality of a plurality of control channel signals is performed to select a control channel signal with the best received quality only when the received quality of a control channel signal currently received does not meet a predetermined quality, and hand-over to a sector to which the selected control channel signal is assigned is thereafter performed.
